# EUROPEAN PATENT APPLICATION

(11) **EP 4 692 263 A1**
(43) Date of publication of application: **11.02.2026**
(21) Application number: 24780274.7
(22) Date of filing: 26.03.2024
(51) Int. Cl.: C09D 201/10, C08K 3/04, C08L 71/02, C08L 75/04, C08L 101/10, C09D 5/18, C09D 7/61, C09D 7/63, C09D 171/02, C09D 175/04, C09K 21/02

(54) **THERMALLY EXPANDABLE REFRACTORY MATERIAL COMPOSITION, THERMALLY EXPANDABLE REFRACTORY MATERIAL, AND METHOD FOR PRODUCING THERMALLY EXPANDABLE REFRACTORY MATERIAL**

(30) Priority: 27.03.2023 JP 2023050580
(71) Applicant: Sekisui Chemical Co., Ltd., Osaka-shi, Osaka 530-8565 (JP)
(72) Inventor: KINOSHITA, Masami, Mishima-gun, Osaka 618-0021 (JP); MIYATA, Shingo, Hasuda-shi, Saitama 349-0198 (JP); IKEUCHI, Takuto, Koka-shi, Shiga 528-0056 (JP); ISHII, Yasuyuki, Koka-shi, Shiga 528-0056 (JP)
(74) Representative: Ter Meer Steinmeister & Partner
(86) International application number: PCT/JP2024/011887
(87) International publication number: WO 2024/204161

(57) **Abstract**

Provided is a thermally expandable fire-resistant material composition comprising a polymer having a moisture-curable functional group, a thermally expandable compound, and a curing catalyst, wherein a coating film obtained by applying the thermally expandable fire-resistant material composition at a thickness of 2 mm has a deep curing time of 60 minutes or less under an environment at 50°C and 13% RH.

## Description

### Technical Field

The present invention relates to a thermally expandable fire-resistant material composition, a thermally expandable fire-resistant material formed from the thermally expandable fire-resistant material composition, and a method for producing the thermally expandable fire-resistant material.

### Background Art

Conventionally, thermally expandable fire-resistant materials that expand when heated have been widely used in buildings and the like. Thermally expandable fire-resistant materials expand when heated, and the resulting expanded residue forms a fire-resistant thermally insulating layer, which exhibits fire-resistant thermally insulating performance, and thus they can prevent fire from occurring and spreading in case of fire disaster. As described in, for example, Patent Literature 1, thermally expandable fire-resistant materials that contain a resin and a thermally expandable compound such as expandable graphite are widely used. Thermally expandable fire-resistant materials are generally fixed to a building or the like through an adhesive layer laminated on the thermally expandable fire-resistant material.

In recent years, formation of a thermally expandable fire-resistant material on a workpiece such as fixture by applying the thermally expandable fire-resistant material composition in a liquid state at room temperature to the workpiece and then curing the composition, has been attempted for purposes including improving workability. In this case, it is known that the thermally expandable fire-resistant material composition contains, for example, a moisture-curing polymer, and is cured by being left standing in an environment at room temperature (see, for example, Patent Literature 2 and 3).

### Citation List

### Patent Literature

PTL 1: JP 2020-45390 A
PTL 2: PCT International Application Publication No. 2022-097740
PTL 3: JP 6825618 B

### Summary of Invention

### Technical Problem

In the case where a thermally expandable fire-resistant material is formed from a moisture-curing thermally expandable fire-resistant material composition as described above, it takes a long time for internal curing in many cases, because the thermally expandable fire-resistant material has a certain thickness. Therefore, after application, the thermally expandable fire-resistant material composition requires a long curing time, with requirement for preparation of a shelf for curing, which creates a problem of inefficient production.

Accordingly, the present invention aims to provide a thermally expandable fire-resistant material composition that can be cured to the internal portion for a short time with an improved productivity even when the composition is moisture-curable, and a method for producing a thermally expandable fire-resistant material formed from the thermally expandable fire-resistant material composition.

### Solution to Problem

The gist of the present invention is as follows.
[1] A thermally expandable fire-resistant material composition comprising a polymer having a moisture-curable functional group, a thermally expandable compound, and a curing catalyst,
   a coating film obtained by applying the thermally expandable fire-resistant material composition at a thickness of 2 mm having a deep curing time of 60 minutes or less under an environment at 50°C and 13% RH.
[2] A thermally expandable fire-resistant material composition comprising a polymer having a moisture-curable functional group, a thermally expandable compound, and a curing catalyst,
   the polymer comprising at least one polymer selected from the group consisting of a crosslinkable silyl group-containing polyoxyalkylene-based polymer having a branched structure, and a silylated urethane.
[3] A thermally expandable fire-resistant material composition comprising a polymer having a moisture-curable functional group, a thermally expandable compound, and a curing catalyst,
   further comprising an inorganic hydrate.
[4] A thermally expandable fire-resistant material composition comprising a polymer having a moisture-curable functional group, a thermally expandable compound, and a curing catalyst,
   the thermally expandable fire-resistant material composition composed of a combination of a first agent containing the polymer and the curing catalyst, and a second agent containing the polymer and water.
[5] The thermally expandable fire-resistant material composition according to any one of items [1] to [4],
   wherein the polymer is a crosslinkable silyl group-containing polymer.
[6] The thermally expandable fire-resistant material composition according to any one of items [1] and [3] to [5],
   wherein the polymer comprises at least one polymer selected from the group consisting of a crosslinkable silyl group-containing polyoxyalkylene-based polymer having a branched structure, and a silylated urethane.
[7] The thermally expandable fire-resistant material composition according to any one of items [1], [2], and [4] to [6],
   further comprising an inorganic hydrate.
[8] The thermally expandable fire-resistant material composition according to any one of items [1] to [7],
   wherein the thermally expandable compound comprises a thermally expandable graphite.
[9] The thermally expandable fire-resistant material composition according to item [8],
   wherein the thermally expandable compound further comprises an intumescent flame retardant.
[10] The thermally expandable fire-resistant material composition according to any one of items [1] to [3] and [5] to [9],
   wherein the composition is composed of a combination of a first agent containing the polymer and the curing catalyst and a second agent containing the polymer and water.
[11] The thermally expandable fire-resistant material composition according to any one of items [1] to [10], wherein the composition has fluidity at room temperature.
[12] A thermally expandable fire-resistant material obtained by curing the thermally expandable fire-resistant material composition according to any one of items [1] to [11].
[13] A method for producing a thermally expandable fire-resistant material comprising:
   a step of applying or filling the thermally expandable fire-resistant material composition according to any one of items [1] to [12] to or into a workpiece, and
   a step of moisture-curing the thermally expandable fire-resistant material composition applied to or filled into the workpiece.
[14] A method for producing the thermally expandable fire-resistant material comprising:
   a step of applying or filling a thermally expandable fire-resistant material composition containing a polymer having a moisture-curable functional group, a thermally expandable compound and a curing catalyst to or into a workpiece; and
   a step of leaving the thermally expandable fire-resistant material composition applied to or filled into the workpiece in an environment at a temperature of 50°C or more and a humidity of 10% RH or more to moisture-cure the thermally expandable fire-resistant material composition.

### Advantageous Effects of Invention

According to the present invention, a thermally expandable fire-resistant material composition that can be cured to an internal portion for a short time with an improved productivity even when the composition is moisture-curable, and a method for producing a thermally expandable fire-resistant material formed from the thermally expandable fire-resistant material composition can be provided.

### Description of Embodiments

Hereinafter, the present invention will be described in detail with reference to embodiments.

### <Thermally expandable fire-resistant material composition>

The thermally expandable fire-resistant material composition according to one embodiment of the present invention contains a polymer having a moisture-curable functional group (hereinafter, simply referred to as "polymer (X)" in some cases), a thermally expandable compound and a curing catalyst. Each component used in the thermally expandable fire-resistant material composition is described in detail below.

### <Polymer component having moisture-curable functional group>

The thermally expandable fire-resistant material composition contains a polymer (X) having a moisture-curable functional group. Moisture-curing property is imparted to the thermally expandable fire-resistant material composition by containing the polymer (X). The polymer (X) is an adhesive component that produces adhesion to a workpiece. Examples of the moisture-curable functional group include a crosslinkable silyl group and an isocyanate group. Examples of the polymer (X) include a crosslinkable silyl group-containing polymer and an isocyanate group-containing polymer. The polymer (X) may be used alone or in combination of two or more types.

Among those described above, the polymer (X) is preferably a crosslinkable silyl group-containing polymer. The crosslinkable silyl group in the crosslinkable silyl group-containing polymer is a moisture-curable functional group, specifically, a functional group represented by the following formula (1). In the crosslinkable silyl group-containing polymer, the number of crosslinkable silyl groups in one molecule is not particularly limited as long as it is one or more, and for example, preferably about 1 to 5, more preferably about 2 to 4.

-SR¹ₐX₃₋ₐ (1)

In formula (1), R¹ is a hydrocarbon group, preferably an alkyl group having 1 to 20 carbon atoms, an aryl group having 6 to 20 carbon atoms, or an aralkyl group having 7 to 20 carbon atoms, and more preferably an alkyl group having 1 to 4 carbon atoms. X represents a reactive group, and the reactive group represented by X is a group selected from the group consisting of a halogen atom, a hydrogen atom, a hydroxyl group, an alkoxy group, an acyloxy group, a ketoxymate group, an amide group, an acid amide group, a mercapto group, a ketoxime group, an alkenyloxy group and an aminoxy group. In the case where a plurality of X are present, X may be the same or different groups. Among them, X is preferably an alkoxy group or a ketoxime group, and more preferably an alkoxy group. Here, a is an integer of 0, 1 or 2, and preferably 0 or 1.

The alkoxy group is preferably an alkoxy group having 1 to 4 carbon atoms, and specific examples include a methoxy group, an ethoxy group, an n-propoxy group, an isopropoxy group, an n-butoxy group, a sec-butoxy group, and a tert-butoxy group. Among them, a methoxy group and an ethoxy group are preferred, and a methoxy group is most preferred.

Examples of the crosslinkable silyl group-containing polymers include a crosslinkable silyl group-containing polyoxyalkylene-based polymer, a crosslinkable silyl group-containing acrylic-based polymer, a crosslinkable silyl group-containing acrylic-modified polyoxyalkylene-based polymer, a silylated urethane, and a crosslinkable silyl group-containing silicone resin. With use of these polymers as polymer (X), the residual hardness and expansion ratio can be increased in a well-balanced manner. In addition, due to good weather resistance, the composition can be used outdoors suitably. Further, a good adhesive strength to a workpiece of various materials tends to be achieved.

As the crosslinkable silyl group-containing polyoxyalkylene-based polymer, a polymer containing a crosslinkable silyl group in its molecule with a polyoxyalkylene in its main chain skeleton is preferred, and a polymer having a polyoxyalkylene in its main chain skeleton with a crosslinkable silyl group at its main chain end is more preferred.

Here, examples of the polyoxyalkylene include polyoxyethylene, polyoxypropylene, polyoxybutylene, polyoxytetramethylene, a polyoxyethylene-polyoxypropylene copolymer, and a polyoxypropylene-polyoxybutylene copolymer. Among them, polyoxypropylene is preferred.

The crosslinkable silyl group-containing polyoxyalkylene-based polymer may be in a linear form or may have a branched structure. In the case of a linear form, a polymer containing crosslinkable silyl groups at both ends of its main chain is more preferred.

Further, in the case of having a branched structure, a polyoxyalkylene having a branched structure is preferred. Specifically, it is preferable that the polyoxyalkylene be obtained by ring-opening polymerization of alkylene oxide using a low molecular weight active hydrogen compound having three or more active hydrogens, such as a polyhydric alcohol having three or more valences, as an initiator. As the low molecular weight active hydrogen compound having three or more active hydrogens, triols such as glycerol and trimethylolpropane may be used, though not particularly limited thereto.

In also the case where the crosslinkable silyl group-containing polyoxyalkylene-based polymer has a branched structure, the crosslinkable silyl group may be present at the molecular chain end. As the polymer has a branched structure, the number of molecular chain ends increases, and thus the number of crosslinkable silyl groups can be also increased. Therefore, the crosslinkable silyl group-containing polyoxyalkylene polymer having a branched structure can have an increased curing rate.

The silylated urethane has a urethane bond (-NHCOO-) or a urea bond (-NHCONH-) in its molecule. The silylated urethane has a urethane bond or a urea bond, and thus the curing rate of the thermally expandable fire-resistant material composition can be enhanced with enhanced curing properties.

The silylated urethane contains a crosslinkable silyl group, preferably, for example, at an end.

The silylated urethane may have a polyoxyalkylene in its main chain skeleton. Specific examples of the polyoxyalkylene are as described above, and among them, polyoxypropylene is preferred.

The silylated urethane preferably has a urethane structure in the main chain skeleton formed through a reaction between an oxyalkylene glycol such as oxypropylene glycol and an isocyanate.

As the crosslinkable silyl group-containing acrylic-modified polyoxyalkylene-based polymer, a polymer containing a crosslinkable silyl group in the molecule with a (meth)acrylic-modified polyoxyalkylene in its main chain skeleton is preferred, and a polymer having a (meth)acrylic-modified polyoxyalkylene in its main chain skeleton with a crosslinkable silyl group at its main chain end is more preferred. Further, the (meth)acrylic-modified polyoxyalkylene is preferably a (meth)acrylic-modified polyoxypropylene.

Examples of the crosslinkable silyl group-containing acrylic-based polymer include polymers having an acrylic polymer in their main chain skeleton with one or more crosslinkable silyl groups in their molecule. Here, the acrylic-based polymer may be a conventionally known one, and is not particularly limited as long as it is an acrylic-based polymer formed through polymerization or copolymerization of one or more acrylic monomers selected from (meth)acrylic acid, (meth)acrylic acid esters, (meth)acrylonitrile, (meth)acrylamide, and the like. The acrylic polymer preferably includes a (meth)acrylic acid ester monomer as main component (for example, 50 mass% or more, preferably 70 mass% or more in the polymer), and examples of the (meth)acrylic acid ester include one having about 4 to 20 carbon atoms.

Further, the acrylic-based polymer may be obtained by copolymerizing a monomer copolymerizable with the acrylic monomer, in addition to the acrylic monomer described above. Examples of the copolymerizable monomer include vinyl monomers such as fluoroolefins, α-olefins, vinyl esters, and vinyl ethers.

The crosslinkable silyl group-containing acrylic-based polymer may have a crosslinkable silyl group at an end, or may have a crosslinkable silyl group in a side chain, or may have crosslinkable silyl groups in both of them.

The crosslinkable silyl group-containing silicone resin may be a polymer having polyorganosiloxane in its main chain and a crosslinkable silyl group at an end.

The number-average molecular weight of the polymer (X) is, for example, 3000 to 100000, preferably 5000 to 50000, and more preferably 7000 to 40000, though not particularly limited. With the number-average molecular weight of the polymer (X) equal to or more than a certain value, the mechanical strength of the thermally expandable fire-resistant material composition after curing, or the like is easily enhanced. With the number-average molecular weight equal to or less than a certain value, the fluidity of the thermally expandable fire-resistant material composition, or the like is easily enhanced.

The number-average molecular weight is a value measured by gel permeation chromatography (GPC) in terms of polystyrene. The same applies to the plasticizers to be described below.

Commercially available products may be also used as the polymer (X). For example, as the crosslinkable silyl group-containing polyoxyalkylene-based polymer, "MS Polymer S203" and "MS Polymer S303" manufactured by Kaneka Corporation may be used. Further, as the crosslinkable silyl group-containing polyoxyalkylene-based polymer having a branched structure, "Excestar S6250" manufactured by AGC Inc. may be used. As the silylated urethane, for example, "SPUR3030" manufactured by Mentive Performance Materials Japan may be used. As the crosslinkable silyl group-containing acrylic-based polymer, "US-6150" manufactured by TOAGOSEI Co., Ltd. may be used. Further, as the crosslinkable silyl group-containing silicone resin, "Sekisui Silicone Sealant" manufactured by Sekisui Fuller Co., Ltd. may be used.

The polymer (X) preferably contains at least one polymer (hereinafter referred to as polymer (X1) in some cases) selected from the group consisting of a crosslinkable silyl group-containing polyoxyalkylene-based polymer having a branched structure and a silylated urethane. In the present invention, use of the polymer (X1) allows the curing rate of the thermally expandable fire-resistant material composition to be increased, and curing in deep portions is rapidly achieved.

The content of the polymer (X1) in the thermally expandable fire-resistant material composition is, for example, 20 to 100 parts by mass, preferably 30 to 80 parts by mass, and more preferably 40 to 70 parts by mass, relative to 100 parts by mass of the polymer (X). When the content of the polymer (X1) is adjusted to equal to or more than a certain amount, the composition is made fast curable, and even a deep portion can be rapidly cured.

As the polymer (X), the polymer (X1) may be used alone, or a polymer other than the polymer (X1) (hereinafter, referred to as polymer (X2) in some cases) may be used in addition to the polymer (X1).

Examples of the polymer (X2) include a crosslinkable silyl group-containing acrylic-based polymer and a crosslinkable silyl group-containing polyoxyalkylene-based polymer in a linear form, though not particularly limited thereto. Use of the crosslinkable silyl group-containing polyoxyalkylene polymer can provide more flexibility, allowing the material to follow the expansion and contraction of members caused by temperature fluctuation. In addition, use of the crosslinkable silyl group-containing acrylic-based polymer provides high weather resistance, and thus deterioration is decreased for use in areas exposed to ultraviolet light.

The content of the polymer (X2) in the thermally expandable fire-resistant material composition is, for example, 0 to 80 parts by mass, preferably 20 to 70 parts by mass, and more preferably 30 to 60 parts by mass, relative to 100 parts by mass of the polymer (X).

The content of the polymer (X) is preferably 10 to 70 mass% based on the total solid content in the thermally expandable fire-resistant material composition. When the content of the polymer (X) is adjusted to equal to or more than 10 mass%, the thermally expandable fire-resistant material obtained by curing the thermally expandable fire-resistant material composition can have good adhesiveness to a workpiece. Further, when the content is adjusted to equal to or less than 70 mass%, a certain amount or more of components other than polymer (X) such as a thermally expandable compound can be contained, and thus various performances such as fire resistance can be enhanced. From these viewpoints, the content of the polymer (X) in the thermally expandable fire-resistant material composition is more preferably 15 to 50 mass% or more, and still more preferably 20 to 40 mass% or more.

### <Thermally expandable compound>

The thermally expandable compound is a compound that expands the thermally expandable fire-resistant material through expansion of the thermally expandable compound itself or generation of gas or the like when heated. Since the thermally expandable fire-resistant material composition contains a thermally expandable compound, the thermally expandable fire-resistant material expands when heated to a temperature equal to or more than the expansion initiation temperature of the thermally expandable compound, and the expanded residue forms a fire-resistant thermally insulating layer. Examples of the thermally expandable compound include a thermally expandable layered inorganic material, an intumescent flame retardant, a thermally expandable microcapsule, and thermally decomposable foaming agents. The thermally expandable compound may be used alone or in combination of two or more types.

### (Thermally expandable layered inorganic material)

The thermally expandable layered inorganic material is a conventionally known material that expands when heated, and examples thereof include vermiculite and thermally expandable graphite, among which thermally expandable graphite is preferred. The thermally expandable layered inorganic material may be used alone or in combination of two or more types.

The thermally expandable layered inorganic material may be in a form of particles or flakes. The thermally expandable layered inorganic material, particularly thermally expandable graphite, can make a degree of expansion high, being capable of forming large-capacity voids during expansion when heated. Further, the expansion initiation temperature can also be adjusted to a temperature range suitable for a fire-resistant material. Furthermore, the residual hardness of the expanded residue can be easily increased, and thus the fire resistance and fire-extinguishing performance of the fire-resistant material can be enhanced.

Thermally expandable graphite is a graphite intercalation compound produced by treating powder of natural flake graphite, pyrolytic graphite, kish graphite or the like with an inorganic acid and a strong oxidizing agent, which is a type of crystalline compound that maintains a layered structure of carbon. Examples of the inorganic acid include concentrated sulfuric acid, nitric acid, and selenic acid. Examples of the strong oxidizing agent include concentrated nitric acid, a persulfate, perchloric acid, a perchlorate, a permanganate, a dichromate, a dichromate, and hydrogen peroxide. The thermally expandable graphite obtained through acid treatment as described above may be further neutralized with ammonia, an aliphatic lower amine, an alkali metal compound, an alkaline earth metal compound, etc.

The particle size of the thermally expandable graphite is preferably 20 to 200 mesh. When the particle size of the thermally expandable graphite is in the range, the graphite expands to form large-capacity voids easily, and thus fire resistance can be increased. Further, dispersibility into a resin is enhanced.

The average aspect ratio of the thermally expandable graphite is preferably 2 or more, more preferably 5 or more, and still more preferably 10 or more. The upper limit of the average aspect ratio of the thermally expandable graphite is preferably 1,000 or less from the viewpoint of preventing the thermally expandable graphite from cracking, though not particularly limited thereto. When the average aspect ratio of the thermally expandable graphite is 2 or more, the graphite expands to form large-capacity voids easily, and thus the flame retardancy is enhanced.

The average aspect ratio of the thermally expandable graphite is determined by measuring the maximum dimension (major axis) and the minimum dimension (minor axis) of 10 pieces of the thermally expandable graphite, respectively, and averaging the values obtained by dividing the maximum dimension (major axis) by the minimum dimension (minor axis). The major axis and minor axis of the thermally expandable graphite can be measured, for example, using a field emission scanning electron microscope (FE-SEM).

### (Intumescent flame retardant)

Examples of the intumescent flame retardant include phosphorus-containing compounds such as ammonium phosphate, ammonium polyphosphate, aluminum phosphite, and melamine polyphosphate. The intumescent flame retardant is a flame retardant that can impart flame retardancy to a thermally expandable fire-resistant material, and also has a property of expanding itself when heated. The intumescent flame retardant may be used alone or in combination of two or more types. From the viewpoint of fire resistance performance and residual hardness, the intumescent flame retardant is preferably at least one selected from the group consisting of ammonium polyphosphate and aluminum phosphite.

### (Thermally expandable microcapsule)

A thermally expandable microcapsule contains a volatile substance such as a low-boiling point solvent encapsulated inside an outer shell resin. When heated, the outer shell resin softens and the encapsulated volatile substance evaporates or expands, and thus the outer shell expands under the resulting pressure so as to increase the particlediameter.

The outer shell of the thermally expandable microcapsule is preferably formed from a thermoplastic resin. The thermoplastic resin may be one or more selected from the group consisting of vinyl polymers of ethylene, styrene, vinyl acetate, vinyl chloride, vinylidene chloride, acrylonitrile, butadiene, chloroprene or the like, and copolymers thereof, polyamides such as nylon 6 and nylon 66, and polyesters such as polyethylene terephthalate. Among them, a copolymer of acrylonitrile is preferred, because through which a volatile substances contained therein hardly permeates. As the volatile substances contained inside the thermally expandable microcapsule, one or more low-boiling liquids selected from the group consisting of hydrocarbons having 3 to 7 carbon atoms such as propane, propylene, butene, normal butane, isobutane, isopentane, neopentane, normal pentane, hexane and heptane, halides of methane such as methyl chloride and methylene chloride, chlorofluorocarbons such as CCl₃F and CCl₂F₂, tetraalkylsilanes such as tetramethylsilane and trimethylethylsilane, and petroleum ether, are used.

A suitable example of the thermally expandable microcapsules is a microcapsule having an outer shell resin of copolymer of acrylonitrile and vinylidene chloride, which encloses a hydrocarbon having 3 to 7 carbon atoms, such as isobutane.

The thermally expandable microcapsule may be used alone or in combination of two or more types.

### (Thermally decomposable foaming agent)

Examples of the thermally decomposable foaming agent include a compound that expands and generates gas when heated. The thermally decomposable foaming agent expands a thermally expandable fire-resistant material composition with the generated gas. As the thermally decomposable foaming agent, an organic or inorganic chemical foaming agent may be used.

Examples of the organic foaming agent include an azo compound such as azodicarbonamide, a metal azodicarboxylate (e.g., barium azodicarboxylate), and azobisisobutyronitrile, a nitroso compound such as N,N'-dinitroso pentamethylene tetramine, a hydrazine derivative such as hydrazodicarbonamide, 4,4'-oxybis(benzenesulfonylhydrazide), and toluenesulfonylhydrazide, a semicarbazide compound such as toluenesulfonylsemicarbazide, melamine, dicyandiamide, and pentalite(pentaerythritol).

Examples of the inorganic foaming agent include ammonium carbonate, sodium carbonate, ammonium hydrogen carbonate, sodium hydrogen carbonate, ammonium nitrite, sodium borohydride, and anhydrous monosodium citrate.

Among them, from the viewpoint of obtaining fine cells and from the viewpoint of economy and safety, azo compounds and nitroso compounds are preferred, azodicarbonamide, azobisisobutyronitrile and N,N'-dinitroso pentamethylene tetramine are more preferred, and azodicarbonamide is particularly preferred. The thermally decomposable foaming agent may be used alone or in combination of two or more types.

Note that in the case of using a thermally expandable microcapsule or a thermally decomposable foaming agent as the thermally expandable compound, it is preferable that the thermally expandable fire-resistant composition further contain at least one selected from the group consisting of an intumescent flame retardant and a flame retardant in order to impart appropriate fire resistance.

The expansion initiation temperature of the thermally expandable compound is preferably 100 to 250°C. When the expansion initiation temperature set to the lower limit or more, the thermally expandable fire-resistant material can be prevented from accidentally expanding except when a fire occurs. Further, with a temperature set to 250°C or less, the material expands rapidly when a fire occurs, and thus fire resistance and fire extinguishing performance can be enhanced. From these viewpoints, the expansion initiation temperature is more preferably 125 to 200°C, still more preferably 150 to 195°C, and furthermore preferably 155 to 190°C.

Preferred examples of the thermally expandable compound having the expansion initiation temperature described above include thermally expandable graphite. Accordingly, the expansion initiation temperature of the thermally expandable graphite is preferably 100 to 250°C, more preferably 125 to 200°C, still more preferably 150 to 195°C, and furthermore preferably 155 to 190°C.

Note that in the case where the thermally expandable fire-resistant composition contains two or more types of thermally expandable compounds, the expansion initiation temperature of at least one of the thermally expandable compounds may be within the range, and it is preferable that the thermally expandable compound having a lowest expansion initiation temperature has the expansion initiation temperature within the range. For example, in the case where the thermally expandable compound contains a thermally expandable graphite and an intumescent flame retardant, the expansion initiation temperature of the thermally expandable graphite is lower than the expansion initiation temperature of the intumescent flame retardant. Accordingly, it is preferable that the expansion initiation temperature of the thermally expandable graphite be within the range as described above.

As described hereinbelow, the expansion initiation temperature is determined by using a rheometer. The thermally expandable compound is heated to measure the temperature at which the force in the normal direction rises, and the measured temperature is determined as the expansion initiation temperature. Although the expansion initiation temperature of a thermally decomposable foaming agent is usually not detected by the measurement method, the temperature at which the agent decomposes to generate gas (decomposition temperature) may be within the temperature range described above.

The content of the thermally expandable compound is preferably 10 to 80 mass% based on the total solid content in the thermally expandable fire-resistant material composition. When the content of the thermally expandable compound is equal to or more than the lower limit, the thermally expandable fire-resistant material has good fire resistance performance resulting from a sufficiently high expansion ratio during combustion. Further, when the content equal to or less than the upper limit, a certain amount or more of polymer (X) can be contained in the thermally expandable fire-resistant material composition, and thus good adhesiveness can be easily developed. Further, after curing, the thermally expandable compound is suitably held by the polymer (X), which enhances mechanical strength and the like of the thermally expandable fire-resistant material.

The content of the thermally expandable compound in the thermally expandable fire-resistant material composition is more preferably 15 to 70 mass%, still more preferably 20 to 60 mass%, and furthermore preferably 25 to 55 mass%.

Among the thermally expandable compounds described above, it is preferable to use at least one of a thermally expandable graphite and an intumescent flame retardant. With use of these, the thermally expandable compound can impart flame retardancy to the thermally expandable fire-resistant material, which makes it easier to enhance the fire resistance performance.

It is more preferable to use at least a thermally expandable graphite as the thermally expandable compound. By using a thermally expandable graphite, the expansion initiation temperature is easily adjusted within the range, and the expansion ratio and the residual hardness are easily increased.

The content of a thermally expandable graphite is preferably 5 to 60 mass% based on the total solid content of the thermally expandable fire-resistant material composition. When the content of the thermally expandable graphite in an amount equal to or more than the lower limit, the expansion ratio and the residual hardness are easily increased, and thus the fire resistance performance of the thermally expandable fire-resistant material is enhanced. Further, when the content of the thermally expandable graphite in an amount equal to or less than the upper limit, a certain amount or more of components other than the thermally expandable graphite, such as polymer (X) and an intumescent flame retardant can be contained in the thermally expandable fire-resistant material composition, and thus various performances tend to be easily enhanced.

The content of the thermally expandable graphite in the thermally expandable fire-resistant material composition is more preferably 7 to 50 mass%, still more preferably 10 to 40 mass%, and furthermore preferably 15 to 30 mass%, based on the total solid content.

In addition, from the viewpoint of fire resistance performance, it is also preferable to use a combination of a thermally expandable graphite and an intumescent flame retardant as the thermally expandable compound. In the case of using these in combination, the content of the thermally expandable graphite is as described above. On the other hand, the content of the intumescent flame retardant is preferably 3 to 70 mass% based on the total solid content of the thermally expandable fire-resistant material composition. When the content of the intumescent flame retardant is equal to or more than the lower limit, the expansion ratio and the residual hardness are easily increased, and thus the fire resistance performance of the thermally expandable fire-resistant material can be enhanced. Further, when the content is equal to or less than the upper limit, a certain amount or more of components other than the intumescent flame retardant, such as the polymer (X) and the thermally expandable graphite, can be contained in the thermally expandable fire-resistant material composition, and thus various performances are enhanced.

The content of the intumescent flame retardant is more preferably 5 to 50 mass%, still more preferably 8 to 40 mass%, and furthermore preferably 10 to 30 mass%.

In the case of using a thermally expandable graphite and an intumescent flame retardant in combination, the content mass ratio of the intumescent flame retardant to the thermally expandable graphite in the thermally expandable fire-resistant material composition (intumescent flame retardant/thermally expandable graphite) is preferably 0.1 to 10. When the content ratio is in the range, the expansion ratio and the residual hardness are easily increased, and thus the fire resistance performance of the thermally expandable fire-resistant material is enhanced. From these viewpoints, the content ratio is more preferably 0.2 to 5, still more preferably 0.4 to 3, and furthermore preferably 0.5 to 2.

### <Curing catalyst>

The thermally expandable fire-resistant material composition of the present invention further contains a curing catalyst. The curing catalyst contained in the thermally expandable fire-resistant material composition of the present invention can accelerate the curing reaction with an increased curing rate. As the curing catalyst, for example, a titanium-based catalyst, a tin-based catalyst, a zirconium-based catalyst, an aluminum-based catalyst, a bismuth-based catalyst, etc. may be used, and among them, a tin-based catalyst is preferred.

The content of the curing catalyst in the thermally expandable fire-resistant material composition is, for example, 0.1 to 15 parts by mass, preferably 0.5 to 10 parts by mass, and more preferably 1 to 6 parts by mass, relative to 100 parts by mass of the polymer (X), though not particularly limited thereto.

### (Inorganic hydrate)

The thermally expandable fire-resistant material composition of the present invention may contain an inorganic hydrate. Examples of the inorganic hydrate include gypsum dihydrate and montmorillonite. The inorganic hydrate releases water contained therein when heated, and the polymer (X) reacts with the released water. Therefore, the thermally expandable fire-resistant material composition containing an inorganic hydrate can accelerate moisture-curing by heating. As the inorganic hydrate, gypsum dihydrate is preferred due to easiness of releasing water and low cost.

The content of the inorganic hydrate in the thermally expandable fire-resistant material composition is, for example, 1 to 50 parts by mass relative to 100 parts by mass of the polymer (X). When the content of the inorganic hydrate is adjusted to 1 part by mass, the effect of the inorganic hydrate on curing acceleration can be sufficiently obtained. Further, when the content is adjusted to 50 parts by mass or less, an effect corresponding to the content can be obtained. The content of the inorganic hydrate is preferably 5 to 40 parts by mass, more preferably 10 to 30 parts by mass.

### (Inorganic filler)

The thermally expandable fire-resistant material composition of the present invention may contain an inorganic filler other than the thermally expandable compound and inorganic hydrate described above. When heated to form an expandable thermally insulating layer, the inorganic filler increases the heat capacity and suppresses heat transfer, while acting as aggregate to enhance the strength of the expanded residue.

The inorganic filler that can be used in the present invention is not particularly limited, and examples thereof include metal oxides such as alumina, zinc oxide, titanium oxide, calcium oxide, magnesium oxide, iron oxide, tin oxide, antimony oxide, and ferrite; metal carbonates such as calcium carbonate, zinc carbonate, strontium carbonate, and barium carbonate; metal hydroxides such as calcium hydroxide, magnesium hydroxide, aluminum hydroxide, and hydrotalcite; calcium salts such as calcium sulfate, gypsum fiber and calcium silicate; silica, diatomaceous earth, dawsonite, barium sulfate, talc, clay, mica, bentonite, activated clay, sepiolite, imogolite, sericite, glass fiber, glass beads, silica-based balloons, aluminum nitride, boron nitride, silicon nitride, carbon black, graphite, carbon fiber, carbon balloons, various metal powders, potassium titanate, magnesium sulfate, lead zirconate titanate, aluminum borate, molybdenum sulfide, silicon carbide, stainless steel fiber, zinc borate, various magnetic powders, slag fiber, fly ash, metal phosphates such as sodium phosphate, potassium phosphate, magnesium phosphate and aluminum phosphate, metal orthophosphates, metal metaphosphates, and metal tripolyphosphates. The inorganic filler may be used alone or in combination of two or more types. Among them, calcium carbonate, barium sulfate and aluminum hydroxide are preferred from the viewpoint of enhancing the fire resistance performance of the thermally expandable fire-resistant material, and calcium carbonate is more preferred, in particular. The inorganic filler may be used alone or in combination of two or more types.

In the case where the thermally expandable fire-resistant material composition contains an inorganic filler, the content thereof is preferably 1 to 50 mass%, more preferably 5 to 45 mass%, and still more preferably 10 to 40 mass%, based on the total solid content of the thermally expandable fire-resistant material composition.

### (Thermoplastic resin)

The thermally expandable fire-resistant material composition may contain a thermoplastic resin. The thermally expandable fire-resistant material composition containing a thermoplastic resin tends to have high mechanical strength after combustion, and thus the residual hardness tends to be increased. In addition, the adhesiveness to a workpiece can be enhanced, and the adhesiveness to a workpiece tends to be improved even after combustion.

As the thermoplastic resin, an ethylene-vinyl acetate copolymer resin (EVA) and ethylene-(meth)acrylic acid ester copolymer resin can be preferably used. The thermoplastic resin may be used alone or in combination of two or more types. Among them, an ethylene-vinyl acetate copolymer resin (EVA) is more preferred as thermoplastic resin.

The ethylene-vinyl acetate copolymer resin (EVA) is not particularly limited as long as it is a copolymerized resin of ethylene and vinyl acetate. The vinyl acetate content of the ethylene-vinyl acetate copolymer resin is preferably 15 to 45 mass%, more preferably 20 to 40 mass%, and still more preferably 25 to 35 mass% from the viewpoint of enhancing adhesiveness, residual hardness, etc., though not particularly limited thereto. The vinyl acetate content is measured in accordance with JIS K 6924-1:1997

The melt flow rate (MFR) of the thermoplastic resin is, for example, 1 to 3000 g/10 min, preferably 5 to 2500 g/10 min, more preferably 10 to 1500 g/10 min, still more preferably 100 to 1000 g/10 min, and furthermore preferably 150 to 1000 g/min from the viewpoint of applicability, adhesiveness, etc., though not particularly limited thereto. The melt flow rate is measured under conditions at 190°C under a load of 21.2 N. The melt flow rate of an ethylene-vinyl acetate copolymer resin may be measured in accordance with JIS K 6924-1:1997. The melt flow rate of a thermoplastic resin other than an ethylene-vinyl acetate copolymer resin, such as ethylene-(meth)acrylic acid ester copolymer resin, may be measured in accordance with JIS K7210:1999.

### (Plasticizer)

The thermally expandable fire-resistant material composition may contain a plasticizer. The use of a plasticizer tends to enhance the fluidity of the thermally expandable fire-resistant material composition. Examples of the plasticizer include phthalates such as dimethyl phthalate, diethyl phthalate, dibutyl phthalate, diisobutyl phthalate, dihexyl phthalate, bis(2-ethylhexyl)phthalate, dioctyl phthalate, diisononyl phthalate, dinonyl phthalate, diisodecyl phthalate, diisoundecyl phthalate, and bisbutylbenzyl phthalate, and polyalkylene glycols such as diethylene glycol, triethylene glycol, tetraethylene glycol, polyethylene glycol, dipropylene glycol, tripropylene glycol, tetrapropylene glycol, and polypropylene glycol.

Among them, polyalkylene glycol is preferred, and polypropylene glycol is more preferred. The plasticizer is preferably a component that is in a liquid state at room temperature.

In the case where the plasticizer is a polyalkylene glycol, the number-average molecular weight thereof is preferably 1000 to 10000, more preferably 1500 to 5000, and still more preferably 2000 to 4000. With the number-average molecular weight of the polyalkylene glycol used as plasticizer in the above range, the thermally expandable fire-resistant material composition ensures fluidity and applicability, with mechanical properties easily enhanced after curing.

The content of the plasticizer in the thermally expandable fire-resistant material composition is preferably 5 to 100 parts by mass, more preferably 20 to 80 parts by mass, still more preferably 35 to 75 parts by mass, and furthermore preferably 45 to 70 parts by mass, relative to 100 parts by mass of the polymer (X).

### (Dehydrating Agent)

The thermally expandable fire-resistant material composition may further contain a dehydrating agent. Due to containing the dehydrating agent, curing of the thermally expandable fire-resistant material composition by moisture contained in the air or the like during storage can be suppressed.

Examples of the dehydrating agent can include silane compounds such as vinyltrimethoxysilane, dimethyldimethoxysilane, tetraethoxysilane, methyltrimethoxysilane, methyltriethoxysilane, tetramethoxysilane, phenyltrimethoxysilane, and diphenyldimethoxysilane, and ester compounds such as methyl orthoformate, ethyl orthoformate, methyl orthoacetate, and ethyl orthoacetate. These dehydrating agents may be used alone or in combination of two or more types. Among them, vinyltrimethoxysilane is preferred.

The content of the dehydrating agent is preferably 0.2 to 15 parts by mass, more preferably 0.5 to 10 parts by mass, and still more preferably 1 to 8 parts by mass, relative to 100 parts by mass of the polymer (X).

### (Coupling agent)

The thermally expandable fire-resistant material composition of the present invention may contain a coupling agent. Due to containing a coupling agent, the thermally expandable fire-resistant material composition can have enhanced adhesive strength to a workpiece, easily. Examples of the coupling agent include a silane coupling agent and a titanium coupling agent, and a silane coupling agent is preferred.

As the silane coupling agent, any known one may be used without any particular limitation, and an aminosilane coupling agent is preferred. The aminosilane coupling agent contains a silicon atom to which an alkoxy group is bonded, and a functional group containing a nitrogen atom, in one molecule. Use of the aminosilane coupling agent tends to enhance the adhesive strength of the thermally expandable fire-resistant material composition easily.

Specific examples of the aminosilane coupling agent include 3-aminopropyltrimethoxysilane, 3-aminopropylmethyldimethoxysilane, 3-aminopropyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(methyldimethoxysilyl)propyl]ethylenediamine, N,N'-bis-[3-(trimethoxysilyl)propyl]hexamethylenediamine, and N,N'-bis-[3-(triethoxysilyl)propyl]hexamethylenediamine. The silane coupling agents may be used alone or in combination of two or more types.

The content of the silane coupling is preferably 0.2 to 15 parts by mass, more preferably 0.5 to 10 parts by mass, and still more preferably 1 to 8 parts by mass, relative to 100 parts by mass of the polymer (X).

### (Flame retardant)

The thermally expandable fire-resistant material composition of the present invention may contain a flame retardant other than the intumescent flame retardant described above. Examples of such flame retardants include phosphoric acid ester compounds. Examples of phosphoric acid ester compounds include trimethyl phosphate, triethyl phosphate, tributyl phosphate, trioctyl phosphate, octyl diphenyl phosphate, tributoxyethyl phosphate, trichloroethyl phosphate, tris(2-chloropropyl)phosphate, tris(2,3-dichloropropyl)phosphate, tris(2,3-dibromopropyl)phosphate, tris(bromochloropropyl)phosphate, bis(2,3-dibromopropyl)-2,3-dichloropropyl phosphate, bis(chloropropyl)monooctyl phosphate, tris(2ethylhexyl)phosphate, triphenyl phosphate, tricresyl phosphate (TCP), trixylenyl phosphate, cresyl diphenyl phosphate, and xylenyl diphenyl phosphate.

The thermally expandable fire-resistant material composition of the present invention may contain additives other than those described above on an as needed basis, to an extent that the object of the present invention is not impaired. Examples of such additives include a lubricant, an anti-shrinkage agent, a crystal nucleating agent, a colorant (pigment, dye, etc.), a UV absorber, an antioxidant, an anti-aging agents, a flame retardant aid, an antistatic agent, a surfactant, a vulcanizing agent, a dispersant, and a surface treatment agent. The additive may be used alone or in combination of two or more types.

### (Method for producing thermally expandable fire-resistant material composition)

The thermally expandable fire-resistant material composition of the present invention may be obtained by mixing a polymer (X), a thermally expandable compound, a curing catalyst, and additives such as an inorganic hydrate, an inorganic filler, a thermoplastic resin, a plasticizer, a dehydrating agent, a coupling agent and a flame retardant which are added on an as needed basis, and other additives. The components are preferably mixed in a sealed mixer under reduced pressure until a homogenous mixture is obtained.

The thermally expandable fire-resistant material composition of the present invention may be a one-component type, or may be a two-component type. In the case of one-component type, the thermally expandable fire-resistant material composition obtained by mixing the components may be stored in a sealed container to avoid contact with moisture. When in use, the composition may be taken out from the sealed container and applied to or filled into a workpiece.

### (Two-component type)

In the case of a two-component type, the thermally expandable fire-resistant material composition is divided into a first agent and a second agent, and the first agent and the second agent may be mixed at the time of use to obtain the thermally expandable fire-resistant material composition. In the two-component type thermally expandable fire-resistant material composition, the mass ratio between the first agent and the second agent (second agent/first agent) is preferably 1 or a value close to 1, preferably 0.8 to 1.2, more preferably 0.9 to 1.1, and more preferably 0.95 to 1.05. In this way, with a mass ratio between the first agent and the second agent controlled to 1 or a value close to 1, the preparation of the thermally expandable fire-resistant material composition is easily achieved.

In the two-liquid type thermally expandable fire-resistant material composition, it is preferable that the first agent contain a curing catalyst, while the second agent contain water. Thereby, no reaction is caused between the first agent and the second agent before mixing, and after mixing, the reaction of the polymer (X) proceeds immediately due to the presence of both water and the curing catalyst in the thermally expandable fire-resistant material composition. Therefore, the thermally expandable fire-resistant material composition can be cured at a high curing rate.

The amount of water added in the thermally expandable fire-resistant material composition is, for example, 0.1 to 8 parts by mass, preferably 0.2 to 5 parts by mass, and more preferably 0.4 to 3 parts by mass, relative to 100 parts by mass of the polymer (X) contained in the entire thermally expandable fire-resistant material composition. When the water content is adjusted to to 0.1 part by mass, the curing reaction can be appropriately accelerated with water when the first agent and the second agent are mixed. Further, when the water content controlled to 8 parts by mass or less, water is prevented from causing unnecessary side reactions.

In a two-component type thermally expandable fire-resistant material composition, it is preferable that the first agent contain polymer (X) in addition to the curing catalyst, and the second agent contains polymer (X) in addition to water. Due to containing polymer (X) in both the first and second agents, both the first and second agents can be flowable at room temperature. However, it is preferable that the first agent contains no water, and the second component contains no curing catalyst. With this configuration, polymer (X), water, and curing catalyst are prevented from coexisting in both the first and second agents, and thus the composition can be prevented from being cured before mixing these components.

Further, each component other than the polymer (X), water, and the curing catalyst may be appropriately contained in each of the first and second agents, and it is preferable that both the first and second agents contain a thermally expandable compound. Furthermore, in the case of using an inorganic filler, it is also preferable that both the first and second agents contain the inorganic filler. Also, in the case of using a plasticizer, it is preferable that the plasticizer be contained in both the first and second agents, and in the case of using a thermoplastic resin, it is preferable that the thermoplastic resin be contained in both the first and second agents. By blending each component separately into the first and second agents, the mixing ratio between the first and second agents tends to be closer to 1 easily.

Among the above, the thermally expandable fire-resistant material composition according to one embodiment of the present invention is preferably in any one of the following aspects (1) to (3) from the viewpoint of enabling curing to the internal part in a short time at an increased curing rate, even though it is a moisture-curable thermally expandable fire-resistant material composition.
(1) The polymer having a moisture-curable functional group (polymer (X)) contains at least one polymer selected from the group consisting of a crosslinkable silyl group-containing polyoxyalkylene-based polymer having a branched structure and a silylated urethane.
(2) The thermally expandable fire-resistant material composition further contains an inorganic hydrate.
(3) The thermally expandable fire-resistant material composition is composed of a combination of a first agent containing the polymer (X) and a curing catalyst, and a second agent containing the polymer (X) and water.

### <Curability>

In the case where the thermally expandable fire-resistant material composition according to one embodiment of the present invention is applied at a thickness of 2 mm, the resulting coating film has a deep curing time of 60 minutes or less under an environment at 50°C and 13% RH. When the deep curing time is 60 minutes or less, in the case where the thermally expandable fire-resistant material composition is applied to or filled into a workpiece and then cured to form a thermally expandable fire-resistant material, the composition can be sufficiently cured to the internal portion in a short time. Therefore, after application or filling, a subsequent work can be performed promptly, and thus the productivity is improved. The deep curing time is preferably 55 minutes or less, more preferably 50 minutes or less, still more preferably 45 minutes or less, and furthermore preferably 40 minutes or less. The shorter the deep curing time, the better, and for example, 5 minutes or more is sufficient. From the viewpoint of ensuring a certain usable time, the deep curing time may be 10 minutes or more.

As shown in Examples described below, the deep curing time is determined as follows. A specific weight is placed on a formed 2-mm thick coating film for 5 seconds every 5 minutes. After removing the weight, whether the curing has progressed into a deep portion or not is determined based on whether or not a mark of the weight remains. The first time when no mark of the weight remains is defined as the deep curing time.

In the present invention, the deep curing time can be shortened as described above through appropriate adjustment of the components to be blended in the thermally expandable fire-resistant material composition. Specifically, as polymer (X), use of polymer (X1) provides the thermally expandable fire-resistant material composition with fast curing properties, and thus curing to a deep portion can be achieved in a short curing time. Also, when the content of the polymer (X1) is equal to or more than a certain amount as described above, the deep curing time is further shortened easily.

Alternatively, due to containing an inorganic hydrate, particularly gypsum dihydrate, in the thermally expandable fire-resistant material composition, the thermally expandable fire-resistant material composition is provided with rapid curing properties and can be cured to a deep portion in a short curing time. Also in this case, with a content of the inorganic hydrate, particularly gypsum dihydrate, controlled to a certain amount or more as described above, the deep curing time is further shortened easily.

Furthermore, with use of a two-component type thermally expandable fire-resistant material composition, of which second agent contains water, the thermally expandable fire-resistant material composition is provided with rapid curing properties and can be cured to a deep portion in a short curing time. Also in this case, with a water content equal to or more than a certain amount as described above, the deep curing time is further shortened easily.

In the case where the thermally expandable fire-resistant material composition of the present invention is applied at a thickness of 2 mm, the resulting coating film has a surface curing time of preferably 40 minutes or less, more preferably 30 minutes or less, still more preferably 25 minutes or less, and furthermore preferably 20 minutes or less, under an environment at 23°C and 50% RH. Through shortening of the surface curing time in addition to the deep curing time, productivity is further enhanced. The shorter the surface curing time, the better, which may be, for example, 5 minutes or more. From the viewpoint of ensuring a certain usable time, the surface curing time may be 10 minutes or more.

As shown in Examples described below, the surface curing time is determined as follows. The surface of a formed 2-mm thick coating film is touched with a spatula every 5 minutes. Whether the curing has progressed at the surface or not is determined based on whether or not the thermally expandable fire-resistant material composition adheres to the spatula. The shortest time during which none of the thermally expandable fire-resistant material composition adheres to the spatula is defined as the surface curing time.

### <Fluidity>

The thermally expandable fire-resistant material composition preferably has fluidity at room temperature (23°C). Having fluidity at room temperature (23°C), the thermally expandable fire-resistant material composition can be easily applied to a workpiece such as building by coating, filling, etc. On the other hand, after curing, the thermally expandable fire-resistant material composition can be adhered to a workpiece with good adhesiveness, resulting from curing after application by coating or the like.

The viscosity of the thermally expandable fire-resistant material composition at 23°C is preferably 1000000 mPa·s or less, more preferably 750000 mPa·s or less, and still more preferably 500000 mPa·s or less. When the viscosity at 23°C is equal to or less than these upper limits, the thermally expandable fire-resistant material composition can have enhanced workability, including good applicability to a workpiece.

Though the viscosity of the thermally expandable fire-resistant material composition at 23°C is not particularly limited, from the viewpoint of preventing the composition from dripping during application of the composition, the viscosity is, for example, 400 mPa·s or more, preferably 4000 mPa·s or more, more preferably 10000 mPa·s or more, and still more preferably 50000 mPa·s or more.

### <Thermally expandable fire-resistant material>

The thermally expandable fire-resistant material of the present invention is obtained by curing the thermally expandable fire-resistant material composition described above. The thermally expandable fire-resistant material of the present invention is preferably obtained by curing the thermally expandable fire-resistant material composition applied to a workpiece, and is preferably formed in a film form on the workpiece.

Alternatively, the thermally expandable fire-resistant material may be obtained by curing the thermally expandable fire-resistant material composition filled into a gap or the like of a workpiece. Examples of the workpiece include members having an internal hollow space, such as square pipes and sash frames, and the thermally expandable fire-resistant material composition may be filled into the hollow space. The size of the thermally expandable fire-resistant material filled into a gap of a workpiece may have a size corresponding to the gap, without a particular limitation.

The thickness of the thermally expandable fire-resistant material formed on a workpiece by applying or filling is, for example, 0.1 to 50 mm, preferably 0.5 to 30 mm, more preferably 1 to 20 mm, and still more preferably 2 to 10 mm.

Among the above, the thickness of the thermally expandable fire-resistant material formed in a film form on the workpiece by applying is relatively thin, being, for example, 0.1 to 20 mm, preferably 0.5 to 15 mm, more preferably 1 to 10 mm, and still more preferably 1.5 to 5 mm, though not particularly limited.

It is preferable that the thermally expandable fire-resistant material of the present invention have a volume expansion ratio of 10 times or more when heated at 600°C for 10 minutes, and a residual hardness of 0.1 kgf /cm² or more. When the volume expansion ratio and a residual hardness are equal to or more than the above lower limits, the thermally expandable fire-resistant material can have good fire resistance performance. The volume expansion ratio is more preferably 20 times or more, and still more preferably 30 times or more. The upper limit of the volume expansion ratio is, for example, 150 times, preferably 100 times, from the viewpoint of having an expanded residual hardness equal to or more than a certain value, though not particularly limited thereto.

The residual hardness is more preferably 0.15 kgf/cm² or more, still more preferably 0.25 kgf/cm² or more, and furthermore preferably 0.3 kgf/cm² or more. The upper limit of the residual hardness is, for example, 1.5 kgf/cm², though not particularly limited thereto.

The volume expansion ratio and the residual hardness may be measured by the measurement methods described in the following Examples.

### <Method for producing thermally expandable fire-resistant material>

A method for producing a thermally expandable fire-resistant material according to one embodiment of the present invention includes the following steps A and B.
Step A: a step of applying or filling the thermally expandable fire-resistant material composition to or into a workpiece, and
Step B: a step of moisture-curing the thermally expandable fire-resistant material composition applied to or filled into the workpiece.

Each of the steps is described below.

### (Step A)

In step A, the method for applying the thermally expandable composition to a workpiece is not particularly limited, and examples thereof include an application method to a workpiece using a caulking gun or a known coating device, and an application method to a workpiece by spraying.

In step A, in the case where the workpiece has a gap or the like as the space into which the thermally expandable fire-resistant material composition can be filled, the thermally expandable fire-resistant material composition may be filled into the workpiece.

In the present invention, as described above, the thermally expandable fire-resistant material composition has fluidity at room temperature, and therefore the thermally expandable fire-resistant material composition can be easily applied to or filled into a workpiece at a temperature around room temperature (for example, about 5 to 40°C). However, the thermally expandable fire-resistant material composition may be appropriately heated before the application or filling.

### (Step B)

Step B is the step of curing the thermally expandable fire-resistant material composition applied to or filled into a workpiece. The curing method is not particularly limited as long as the thermally expandable fire-resistant material composition is moisture-cured. For example, the thermally expandable fire-resistant material composition (i.e., the workpiece applied or filled with the thermally expandable fire-resistant material composition) may be left standing under atmospheric conditions at around room temperature (e.g., about 5 to 40°C), and thus the thermally expandable fire-resistant material composition can be moisture-cured.

The time period for which the thermally expandable fire-resistant material composition is left standing is, for example, about 10 to 1440 minutes, preferably about 20 to 720 minutes, and more preferably about 30 to 360 minutes, though not particularly limited thereto.

However, the thermally expandable fire-resistant material composition applied to or filled into the workpiece may be heated on an as needed basis, for example, to a temperature of 40°C or more, or to a temperature of 50°C or more. The upper limit of the temperature is, for example, 90°C, and preferably 80°C, though not particularly limited thereto. The polymer (X) can be more rapidly cured to a deep portion by heating and then curing rather than curing at around room temperature.

Alternatively, the thermally expandable fire-resistant material composition (i.e., a workpiece with the thermally expandable fire-resistant material composition applied to or filled into) may be left standing in a humidity-controlled high-humidity environment so that the thermally expandable fire-resistant material composition may be moisture-cured. The polymer (X) may be more rapidly cured to a deep portion when left standing in a high-humidity environment rather than moisture-curing in the atmosphere. Specifically, the humidity may be adjusted to, for example, 10% RH or more, 40% RH or more, 50% RH or more, or 60% RH or more. The upper limit of the humidity may be, for example, 90% RH or less, and preferably 80% RH or less, though not particularly limited thereto.

### (One preferred embodiment)

A method for producing a thermally expandable fire-resistant material according to one preferred embodiment of the present invention sequentially performs the following steps A1 and A2.
A1: a step of applying or filling a thermally expandable fire-resistant material composition to or into a workpiece; and
A2: a step of leaving the thermally expandable fire-resistant material composition applied to or filled into the workpiece in an environment at a temperature of 50°C or more and a humidity of 10% RH or more, so that the thermally expandable fire-resistant material composition is moisture-cured.

In the production method according to the present embodiment, step A1 is the same as step A described above, and in the present step A1, similar to step A, the thermally expandable fire-resistant material composition may be applied to or filled into the workpiece.

In step B2, similarly to step B described above, the thermally expandable fire-resistant material composition applied to or filled into the workpiece is moisture-cured. In the present step B2, the thermally expandable fire-resistant material composition is left standing in an environment at a temperature of 50°C or more and a humidity of 10% RH or more to perform moisture-curing.

In the present step B2, as described above, the thermally expandable fire-resistant material composition is moisture-cured at high temperature and high humidity, and thus the thermally expandable fire-resistant material composition can be rapidly cured into a deep portion thereof in a short period of time.

The upper limit of the temperature is, for example, 90°C, preferably 80 °C, and more preferably 70°C, though not particularly limited thereto. In step B2, with a temperature set to these upper limits or less, rapid curing can be achieved without using extra energy, and without causing deterioration of the workpiece due to heating, or without dripping of the thermally expandable fire-resistant material composition.

In addition, the humidity is preferably 13% RH or more. The upper limit of the humidity is, for example, 90% RH, preferably 80% RH, and more preferably 70% RH, though not particularly limited thereto. When the humidity in the step B2 is set to these upper limits or less, rapid curing can be achieved without using extra energy, and without causing deterioration of the thermally expandable fire-resistant composition or the workpiece due to moisture.

In this case, the time period for which the thermally expandable fire-resistant material composition is left at the temperature and the humidity described above is, for example, about 10 to 180 minutes, preferably 20 to 120 minutes, and more preferably 25 to 80 minutes, though not particularly limited thereto.

The thermally expandable fire-resistant material composition used in the production method of the present embodiment is as described above, and detailed description thereof will be omitted. However, the deep curing time of the thermally expandable fire-resistant material composition is not necessarily 60 minutes or less, and may be longer than 60 minutes. Even with a deep curing time of longer than 60 minutes, rapid curing of the thermally expandable fire-resistant material composition is achieved by moisture-curing of the thermally expandable fire-resistant material composition at high temperature as described above, and thus the thermally expandable fire-resistant material composition can be cured into a deep portion in a short time.

Obviously, in order to achieve faster curing in the present embodiment, the deep curing time of the thermally expandable fire-resistant material composition may be 60 minutes or less as described above, preferably 55 minutes or less, more preferably 50 minutes or less, still more preferably 45 minutes or less, and furthermore preferably 40 minutes or less.

Note that it can be said that in the production method, a fire-resistant workpiece including a workpiece and a thermally expandable fire-resistant material formed thereon is produced.

### <Use>

The thermally expandable fire-resistant material composition and the thermally expandable fire-resistant material of the present invention may be used in various buildings such as detached houses, apartment buildings, high-rise houses, high-rise buildings, commercial facilities and public facilities, various vehicles such as automobiles and trains, ships, aircrafts, electronic devices, and the like.

For example, in buildings, the composition may be applied to fittings such as windows, paper screens, doors and sliding doors, as well as building materials other than fittings such as walls, beams, pillars, floors, bricks, roofs, boards, piping and wiring. For example, in the case of fittings, the thermally expandable fire-resistant material composition may be applied to a sash and cured to form a fireproof sash having a thermally expandable fire-resistant material.

Alternatively, in the case of buildings, the composition may be filled into a gap formed in walls, ceilings, floors, etc., for use as a fire-resistant filler or a fire-resistant watertight filler. More specifically, the composition may be filled into a gap in a penetration part disposed in walls, ceilings or floors through which piping or wiring penetrates (e.g., partition penetration parts), for use as a fire-resistant filler or a fire-resistant watertight filler. Further, the thermally expandable fire-resistant material composition may be filled and cured inside frame materials such as sash frames constituting fittings, or inside square pipes constituting pillars, beams, etc., so as to form fittings, pillars or beams having the thermally expandable fire-resistant material.

Furthermore, the composition may be applied to an exterior wall of buildings or filled into gaps of an exterior wall, for use as fire-resistant joint material.

The thermally expandable fire-resistant material composition of the present invention may be also used in battery cases, electronic devices such as smartphones, etc. The composition for use is applied to the surface of battery cases for lithium ion batteries or the like, or to the cover material of electronic devices, or filled into a gap in battery cases or a gap inside electronic devices. In the case where the thermally expandable fire-resistant material composition of the present invention is used in electronic devices, fires can be prevented from occurring even when batteries such as lithium ion batteries cause thermal runaway.

The thermally expandable fire-resistant material composition of the present invention is also usable as an adhesive, and may be used to bond various parts in various buildings, various vehicles such as automobiles and trains, ships, aircrafts, electronic devices, etc. Also, the composition may be used as a packing for sealing between parts in various buildings, various vehicles such as automobiles and trains, ships, aircrafts, electronic devices, etc. In particular, in the case of using as an adhesive, packing, etc. around a battery such as a lithium ion battery in electric vehicles or electronic devices such as smartphones, fires that occur when a battery such as a lithium ion battery causes thermal runaway can be effectively suppressed. Furthermore, in ships, the composition may be used as an adhesive, a watertight material, etc. in a part under fire safety regulations for ships.

Among the above, the thermally expandable refractive material composition of the present invention is more preferably used for fittings.

### Examples

The present invention will be explained in more detail in the following with reference to Examples, though the present invention is not limited thereto.

The components used in Examples and Comparative Examples are as follows.

### <Polymer (X)>

- Si-containing PPG polymer: "MS Polymer S303", manufactured by Kaneka Corporation; polyalkylene oxide having a main chain skeleton formed of polypropylene oxide, with a propyldimethoxysilyl group at an end of the main chain, in a linear form, number-average molecular weight: 20000
- Si-containing acrylic polymer: an acrylic-based polymer having a trimethoxysilyl group at an end of the main chain skeleton or on a side chain, manufactured by TOAGOSEI Co., Ltd., product name "US-6150", weight-average molecular weight: 7,000
- Branched Si-containing PPG polymer: manufactured by AGC Inc., product name "Exestar S6250", a polyoxypropylene-based polymer having a main chain of polyoxypropylene and a branched structure in the main chain, a dimethoxysilyl group at an end of the main chain, the number of dimethoxysilyl groups = 3, number-average molecular weight: 8000
- Silylated urethane: "SPUR3030", manufactured by Mentive Performance Materials Japan, silylated urethane, main chain skeleton of polypropylene oxide, which has a urethane bond or a urea bond, with a trimethoxysilyl group at both ends of main chain. Number-average molecular weight: 22300

### <Thermally expandable compound>

- Thermally expandable graphite: "EXP42S160", manufactured by Fujikokuen Co., Ltd., expansion initiation temperature: 160°C
- Aluminum phosphite: "APA100", manufactured by Taihei Chemical Industrial Co., Ltd.
- Gypsum dihydrate: "Calcium sulfate A", manufactured by Yoshino Gypsum Co., Ltd.
- Calcium carbonate: "BF300", manufactured by Bihoku Funka Kogyo Co., Ltd.
- EVA: ethylene-vinyl acetate copolymer resin, hot-melt type adhesive base, "Ultrathene 726", manufactured by Tosoh Corporation, vinyl acetate content: 33 mass%, melt flow rate: 700 g/10 min (190°C, load: 21.2 N)
- Plasticizer: "Exenol 3020", polyether-based plasticizer (polypropylene glycol), manufactured by AGC Inc., number-average molecular weight: 3200
- Curing catalyst: dibutyltin-based compound, "Neostann U220H", manufactured by Nitto Kasei Co., Ltd.
- Dehydrating agent: "KBM-1003", manufactured by Shin-Etsu Chemical Co., Ltd., vinyltrimethoxysilane
- Coupling agent: "KBM-603", N-(2-aminoethyl)-3-aminopropyltrimethoxysilane
- Water

### (Experimental Examples 1 to 5, and Experimental Examples 7 to 9)

The components each were mixed until homogeneous in accordance with the formulation in Table 1 under a vacuum atmosphere for 60 minutes, using a planetary mixer, and thus a one-liquid type thermally expandable fire-resistant composition was obtained.

### (Experimental Examples 6 and 10)

The components each were mixed until homogeneous in accordance with the formulation in Table 1 under a vacuum atmosphere for 60 minutes, using a planetary mixer, and thus a first agent and a second agent were obtained. The first agent and the second agent were mixed immediately before the measurement and evaluation of each physical property, and thus a thermally expandable fire-resistant composition was obtained.

The methods for measuring and evaluating each physical property are as follows.

### [Evaluation method]

### (Expansion initiation temperature of thermally expandable graphite)

As a sample, 100 mg of thermally expandable graphite was collected, and the temperature was increased at a rate of 10°C /min using a rheometer ("Discovery HR2" manufactured by TA Instruments) to measure the temperature at which the force in normal direction rises, which was defined as the expansion initiation temperature.

### (Viscosity)

The viscosity of the thermally expandable fire-resistant material at 23°C is a value measured in accordance with JIS K6833 using a B-type viscometer at a rotation speed of 10 rpm.

### (Deep curing time)

Under an atmosphere at 23°C and 50% RH, the thermally expandable fire-resistant material composition sealed in a paper cartridge was extruded from a caulking gun onto a metal plate (material: SUS) and applied at a coating film thickness of 2 mm. Immediately after application (after 1 second), or after application, the coating film was left standing in an environment at a temperature of 50°C and a humidity of 13% RH, and a cylindrical metal weight (weight: 500 g) with a diameter of 2 cm was placed on the coating film for 5 seconds every 5 minutes after application. The first time when the weight was removed without a trace of the shape of the weight caused by weighing of the weight was defined as deep curing time. The weight was placed at a different location each time.

### (Surface curing time)

Under the same conditions as for the deep curing time, the thermally expandable fire-resistant material composition was applied at a thickness of 2 mm. The coating film was left standing in an environment at a temperature of 23°C and a humidity of 50% RH immediately after application (after 1 second) or after application, and the surface of the coating film was touched with a metal spatula every 5 minutes after application. The shortest time at which none of the thermally expandable fire-resistant material composition adhered to the spatula was measured as the surface curing time.

### (Fire resistance performance test)

The thermally expandable fire-resistant material composition obtained in each Example was coated to a 98-mm square iron plate at 23°C to form a 30 mm square, and the thermally expandable fire-resistant material composition was left standing to be cured in an environment at 23°C and 50% RH for 168 hours, and thus a thermally expandable fire-resistant material with a thickness of approximately 1.5 mm was formed on the iron plate.

The iron plate on which the thermally expandable fire-resistant material was formed was placed in an electric furnace kept at 600°C in advance. After heating and burning for 10 minutes, the iron plate was taken out. The expansion ratio was calculated by the following formula.

Expansion ratio=Volume of expanded residue after combustion/Volume of thermally expandable fire-resistant material before combustion.

Using a compression tester (manufactured by Kato Tech Co., Ltd., "Finger Feeling Tester"), compression was applied from the top surface of the expanded residue with a compressor (a three-point indenter with a diameter of 1 mm) at a rate of 0.1 cm/s, and the maximum compression load at a compression depth of 0 to 8 mm was read and recorded as the residual hardness.

### (Adhesive strength)

Two SUS plates specified in JIS G4303 were prepared. The SUS plates were 100-mm long, 20-mm wide, and 4.0-mm thick, and had a flat rectangular shape. The thermally expandable fire-resistant material composition was coated to the surface of one of the SUS plates, and the other SUS plate was placed on the surface coated with the thermally expandable fire-resistant material composition to prepare a laminate. The thermally expandable fire-resistant material composition was coated to an aluminum alloy plate at room temperature, so that the coating width (longitudinal direction) was 20 mm, the coating length (lateral direction) was 20 mm, and the coating thickness was 0.3 mm.

The laminate was left standing in an environment at 23°C and 50% RH for 7 days, and the two SUS plates were bonded together with the thermally expandable fire-resistant material to prepare a test specimen. The resulting test specimen was subjected to a tensile test using a universal tensile tester (manufactured by Instron Corp.). The test specimen was pulled in the shear direction at a rate of 1 mm/min, and the tensile shear strength at the time when the thermally expandable fire-resistant material constituting the test specimen broke was measured.

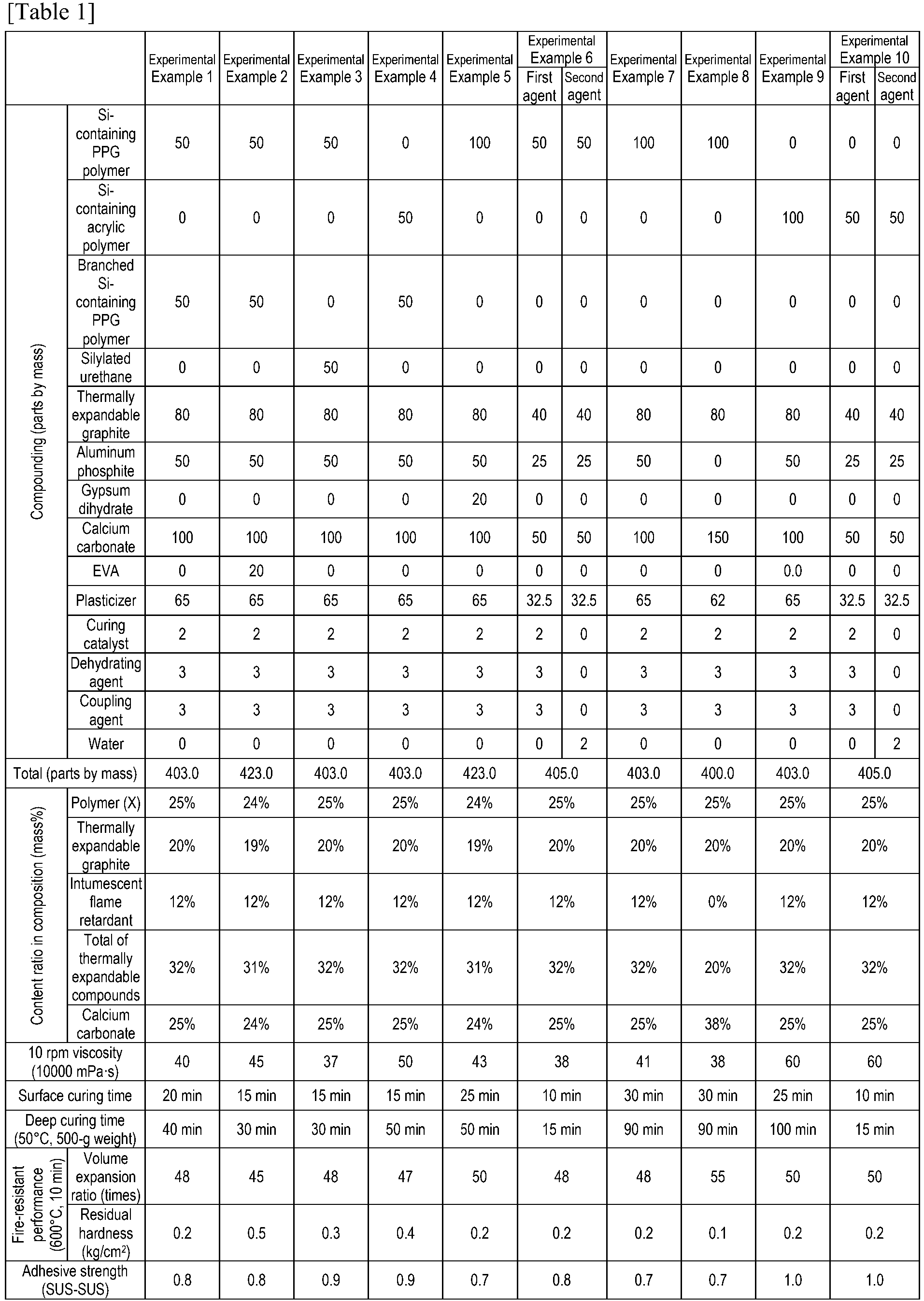

In Experimental Examples 1 to 10 described above, as shown by the deep curing time, when the thermally expandable fire-resistant material composition was left standing at high temperature (under environment at 50°C, 13% RH), curing to a deep portion was achieved in a short time within 2 hours. Therefore, it can be understood that the thermally expandable fire-resistant material composition can be rapidly cured by curing at high temperature with improved productivity.

Further, the thermally expandable fire-resistant material compositions of Experimental Examples 1 to 6 and 10 had a deep curing time of 60 minutes or less, and thus when the compositions were applied to an iron plate or the like and left standing at room temperature, curing was achieved in a relatively short time. For example, when the coating film was pressed with a finger after curing at room temperature for 2 hours, no deformation occurred. In other words, a strongly cured coating film was formed in a short time. Further, in Experimental Examples 1 to 6 and 10, bonding to an iron plate was achieved with high adhesive strength, and a thermally expandable fire-resistant material having good fire resistance performance could be obtained. In contrast, in Experimental Examples 7 to 9, the deep curing time was longer than 60 minutes, and thus when the compositions were applied to an iron plate or the like and left standing at room temperature, curing was not achieved in a short time. For example, when the coating film was pressed with a finger after 2 hours, deformation occurred. In other words, a strongly cured coating film could not be formed in a short time.

## Claims

1. A thermally expandable fire-resistant material composition comprising a polymer having a moisture-curable functional group, a thermally expandable compound, and a curing catalyst,
a coating film obtained by applying the thermally expandable fire-resistant material composition at a thickness of 2 mm having a deep curing time of 60 minutes or less under an environment at 50°C and 13% RH.

2. A thermally expandable fire-resistant material composition comprising a polymer having a moisture-curable functional group, a thermally expandable compound, and a curing catalyst,
the polymer comprising at least one polymer selected from the group consisting of a crosslinkable silyl group-containing polyoxyalkylene-based polymer having a branched structure, and a silylated urethane.

3. A thermally expandable fire-resistant material composition comprising a polymer having a moisture-curable functional group, a thermally expandable compound, and a curing catalyst,
further comprising an inorganic hydrate.

4. A thermally expandable fire-resistant material composition comprising a polymer having a moisture-curable functional group, a thermally expandable compound, and a curing catalyst,
the thermally expandable fire-resistant material composition composed of a combination of a first agent containing the polymer and the curing catalyst, and a second agent containing the polymer and water.

5. The thermally expandable fire-resistant material composition according to claim 1, wherein the polymer is a crosslinkable silyl group-containing polymer.

6. The thermally expandable fire-resistant material composition according to claim 1,
wherein the polymer comprises at least one polymer selected from the group consisting of a crosslinkable silyl group-containing polyoxyalkylene-based polymer having a branched structure, and a silylated urethane.

7. The thermally expandable fire-resistant material composition according to claim 1, further comprising an inorganic hydrate.

8. The thermally expandable fire-resistant material composition according to claim 1,
wherein the thermally expandable compound comprises a thermally expandable graphite.

9. The thermally expandable fire-resistant material composition according to claim 8,
wherein the thermally expandable compound further comprises an intumescent flame retardant.

10. The thermally expandable fire-resistant material composition according to claim 1,
wherein the composition is composed of a combination of a first agent containing the polymer and the curing catalyst and a second agent containing the polymer and water.

11. The thermally expandable fire-resistant material composition according to claim 1, wherein the composition has fluidity at room temperature.

12. A thermally expandable fire-resistant material obtained by curing the thermally expandable fire-resistant material composition according to any one of claims 1 to 11.

13. A method for producing a thermally expandable fire-resistant material comprising:
a step of applying or filling the thermally expandable fire-resistant material composition according to any one of claims 1 to 11 to or into a workpiece, and
a step of moisture-curing the thermally expandable fire-resistant material composition applied to or filled into the workpiece.

14. A method for producing the thermally expandable fire-resistant material comprising:
a step of applying or filling a thermally expandable fire-resistant material composition containing a polymer having a moisture-curable functional group, a thermally expandable compound and a curing catalyst to or into a workpiece; and
a step of leaving the thermally expandable fire-resistant material composition applied to or filled into the workpiece in an environment at a temperature of 50°C or more and a humidity of 10% RH or more to moisture-cure the thermally expandable fire-resistant material composition.
